# EUROPÄISCHE PATENTSCHRIFT

(11) **EP 1 084 081 B1**
(45) Veröffentlichungstag und Bekanntmachung des Hinweises auf die Patenterteilung: **14.08.2002**
(21) Anmeldenummer: 99932639.0
(22) Anmeldetag: 06.05.1999
(51) Int. Cl.: C02F 1/46

(54) **ELEKTROCHEMISCHE VORRICHTUNG ZUM REINIGEN VON WASSER**
ELECTROCHEMICAL DEVICE FOR PURIFYING WATER
DISPOSITIF ELECTROCHIMIQUE DE PURIFICATION D'EAU

(30) Priorität: 06.05.1998 DE 19820002; 18.03.1999 DE 19912013
(43) Veröffentlichungstag der Anmeldung: 21.03.2001
(73) Patentinhaber: Komitec Kommunikationstechnik GmbH, 09468 Geyer (DE)
(72) Erfinder: KLOSE, Giselher, D-09392 Auerbach (DE); METZING, Peter, D-02991 Lauta (DE); GETZLAFF, Uwe, D-09599 Freiberg (DE)
(74) Vertreter: Rumrich, Gabriele
(86) Internationale Anmeldenummer: DE9901363
(87) Internationale Veröffentlichungsnummer: WO9957065

(56) Entgegenhaltungen:
- EP-A- 0 668 244
- WO-A-97/12078
- DE-A- 2 227 084
- DE-A- 4 343 077
- US-A- 4 212 724
- US-A- 4 802 991
- PATENT ABSTRACTS OF JAPAN vol. 017, no. 606 (C-1128), 8. November 1993 (1993-11-08) & JP 05 185072 A (HITACHI LTD), 27. Juli 1993 (1993-07-27)

## Beschreibung

Die Erfindung betrifft eine Vorrichtung zum Reinigen von Wasser, mit einem Gehäuse, in welchem Elektroden angeordnet sind, einem Zulauf für das zu reinigende Wasser, einem Ablauf für das Bewegen des Wassers im Kreislauf, eine Abfluß für die Entleerung des Gehäuses und Wirbelkörpern, die teilweise oder vollständig elektrisch leitend sind.

Aus DE 33 36 460 A1 ist ein Verfahren und eine Vorrichtung zu Reinigung von Wasser bekannt, wobei dieses an Elektroden aus 2- oder 3-wertigen Metallen unterschiedlicher Polarität vorbei geführt wird und die Elektroden von einem bewegten Bett aus festen nicht leitenden Teilchen umgeben sind, die eine höhere Dichte als das zu reinigende Wasser aufweisen. Vorzugsweise wird als Elektrodenwerkstoff Eisen oder Aluminium verwendet. Die Elektroden und das bewegte Bett aus nichtleitenden Teilchen sind in einer Elektrolysekammer angeordnet, zu deren Unterseite eine Zuführleitung führt und an deren Oberseite eine Ausflockungskammer vorgesehen ist, die sich konisch erweitert. Bei Wasser mit einem geringen Leitwert werden dabei die Plattenabstände sehr gering gewählt, was einen schnellen Verschleiß der Platten zu Folge hat. Weiterhin erfolgt durch die geringen Plattenabstände eine schnelle Isolierung der Elektrodenplatten durch eine sich darauf bildende nichtleitende Schicht aus während der Elektrolyse entstehenden Ausflockungen. Weiterhin ist der Boden der Elektrolysekammer strömungstechnisch ungünstig ausgebildet. Durch die konische Erweiterung der Aufflockungskammer wird die Strömungswirkung rasch und bis auf Unwirksamkeit abgebaut und außerdem ein relativ großer Platzbedarf benötigt. Um die elektrisch nicht leitenden Teilchen in ständige Bewegung zu versetzen ist am unteren Bereich der Elektrolysekammer ein Gebläse angeordnet.

Bei einer Wasserreinigungseinrichtung für die Verwendung mit Aquarien gemäß US 4,212,724 wird Wasser aus dem Aquarium abgepumpt, einem mit Elektroden versehenen Behälter zugeführt und nach Reinigung und Filterung wieder zurückgeführt. Da das Zuführen von oben und das Rückführen durch einen halbkreisförmigen Behälterboden erfolgt, ist nur eine geringe Verwirbelung der Wirbelkörper und damit nur eine geringe Reinigungsleistung zu verzeichnen.

Eine Vorrichtung zur Reinigung von Schmutzwässern gemäß DE 43 29 272 C1 läßt das Wasser seitlich eines abgerundeten Behälterbodens eintreten, um es am oberen Rand des Behälters in ein Beruhigungsbecken wieder austreten zu lassen. Dabei werden lediglich die in der Mitte des Behälterbodens liegenden Wirbelkörper von der Strömung erfaßt, während die übrigen in relativer Ruhe verharren.

Aufgabe der Erfindung ist es, eine Vorrichtung zum Reinigen von Wasser nach dem Oberbegriff des Patentanspruches 1 zu schaffen, die eine bessere Reinigungsleistung aufweist.

Erfindungsgemäß wird diese Aufgabe durch die Merkmale des Patenmtanspruches 1 gelöst. Vorteilhafte Ausbildungen ergeben sich aus den Unteransprüchen.

Die Vorrichtung zum Reinigen von Wasser umfaßt ein Gehäuse, in welchem Elektroden angeordnet sind, einen Zulauf für das zu reinigende Wasser, einen Ablauf für das Bewegen des Wassers im Kreislauf, einen Abfluß für die Entleerung des Gehäuses und Wirbelkörper, die teilweise oder vollständig elektrisch leitend sind. Erfindungsgemäß weist der Bodenbereich des Gehäuses in einer Ebene eine halbkreisförmig abgerundete Form und in der dazu im Winkel von 90 Grad liegenden Ebene eine sich nach unten verjüngende Form auf, wobei der Zulauf mittig zu dem sich trapezförmig verjüngenden Bodenbereich in Bodennähe mündet, um eine Strömung entlang des sich halbkreisförmig verjüngenden Bodenbereichs zu erzeugen, und die Elektroden dem Bodenbereich nachgeformt und parallel zur Strömungsrichtung angeordnet sind. Von der Strömung werden alle Wirbelkörper erfaßt. Die Reinigungsleistung ist entsprechend hoch. Mit der Vorrichtung kann Wasser mit geringem elektrischen Leitwert ohne starken Verschleiß der Elektroden und sich bildende Ausflockungen an den Elektrodenplatten gereinigt werden, wobei die Einrichtung einen geringen Platzbedarf benötigt und eine strömungstechnisch günstige Form aufweist.

Zwischen dem Ablauf und dem Zulauf sind eine Bypaßleitung und eine Pumpe angeordnet, durch welche im Umwälzbetrieb das zu reinigende Wasser über den Ablauf und einen dem Ablauf zugeordneten Filter abgesaugt und über den Zulauf dem Gehäuse wieder zugeführt wird. Der Zulauf ist dann vorzugsweise innerhalb des Behälters geführt.

Der Ablauf kann aber auch unter Zwischenschaltung eines Filters direkt in den Zulauf führen, wobei zwischen dessen ablaufseitiger Anschlußstelle und dessen gehäuseseitiger Mündung eine Pumpe angeordnet ist. In diesem Fall ist der Zulauf vorzugsweise außerhalb des Behälters geführt.

In beiden Fällen kann der Boden einen mit einer Siebfläche versehenen Abfluß aufweisen.

Das zu reinigende Wasser wird an Elektroden unterschiedlicher Polarität vorbeigeführt, wobei die Elektroden von einem bewegten Bett aus Wirbelkörpern umgeben sind, die eine höhere Dichte als das zu reinigende Wasser aufweisen. Ein Teil oder alle Wirbelkörper bestehen aus elektrisch leitendem Material, so daß während der Elektrolyse über die sich bei Berührung mit den Elektroden elektrisch aufladenden Wirbelkörper eine Erhöhung der aktiven Elektrodenoberfläche erfolgt. Dadurch wird die Reinigungswirkung im Vergleich zu herkömmlichen Lösungen wesentlich verbessert. Weiterhin bilden sich durch die Berührung der Wirbelkörper untereinander und durch den Abrieb ständig hoch oxydative und elektrochemisch aktive Metalloberflächen an den Wirbelkörpern. Durch die sich zwischen den Elektroden bewegenden elektrisch geladenen Wirbelkörper wird weiterhin einerseits eine temporäre und lokale Überhöhung des Gradienten des elektrischen Feldes zwischen den Elektroden andererseits eine Reinigung der Elektrodenflächen erzielt. Durch die Bewegung der Wirbelkörper und der sich ständig ändernden Ladungen wird ein ständiges Wechselfeld erzeugt.

Die Bewegung der Wirbelkörper wird durch eine Strömung des Wassers erzeugt. Dies kann über eine Einströmöffnung, eine Pumpe oder ein Rührgerät erfolgen. Mit dem erfindungsgemäßen Verfahren kann stark verunreinigtes Wasser mit Verunreinigungen in Form von Ölen, Fetten, Kohlenwasserstoffen, Tensiden, Phosphaten, Schwermetallen, Schwebeteilchen organischer und anorganischer Art und anderen Belastungsstoffen gereinigt werden. Dabei ist es möglich, daß Wasser mit geringem Leitwert bei hoher Effektivität aufbereitet werden kann. An die Elektrode kann bedarfsweise Gleich- oder Wechselstrom angelegt werden, wobei die anliegende Spannung vorzugsweise 2 bis 65 Volt beträgt.

Die Vorrichtung weist einen Zulauf für das zu reinigende Wasser, einen Abfluß für die Entleerung des Gehäuses, einen Ablauf für das mit ausgeflockten Verunreinigungen versehene Wasser auf. In dem Gehäuse befinden sich die Elektroden und eine Schüttung aus Wirbelkörpern. Zumindest ein Teil oder alle Wirbelkörper besteht aus elektrisch leitendem Werkstoff, wobei vorzugsweise Eisengranulat, Graphit, Aluminium oder andere geeignete elektrisch leitende Werkstoffe zum Einsatz kommen. Auch Gemische aus leitenden und nichtleitenden Materialien sind möglich. Als eine Form der Eisengranalien kann beispielsweise Walzzunder als Wirbelkörper eingesetzt werden. Dieser fällt als Abfallprodukt in Walzwerken an und ist daher sehr preisgünstig.

Der Abstand der Elektroden sollte in etwa dem eineinhalb bis zehnfachen der Korngröße der Wirbelkörper entsprechen um eine optimale Reinigungswirkung zu erzielen. Dabei kann die Dicke der Elektroden gleich oder unterschiedlich sein. Die Eintauchtiefe der Elektroden sollte so gewählt werden, daß ein definierter Abstand zum Bodenbereich des Behälters gegeben ist und die Strömung des Wassers und somit der Wirbelkörper optimal ist.

Dabei können die einzelnen Elektroden in Abhängigkeit von der Bodenform des Behälters ausgebildet sein und auch eine der Bodenform des Behälters angepaßte unterschiedliche Eintauchtiefe aufweisen. Der Boden des Gehäuses ist strömungstechnisch vorteilhaft ausgebildet, und hat vorzugsweise eine im wesentlichen halbkreisförmige Form.

Vorteilhafter Weise besteht das Gehäuse aus Kunststoff oder einem ähnlichem elektrisch nicht leitendem Werkstoff.

Es ist jedoch auch möglich, das Gehäuse aus metallischem Werkstoff herzustellen, wobei im Falle des Anlegens von Gleichstrom an das Gehäuse der Minuspol angeschlossen wird.

Im Bodenbereich des Behälters sind Mittel zur Erzeugung einer Strömung vorgesehen. Dazu kann beispielsweise ein Tauchrohr für die Zuführung des Wassers bis nahe zum Bodenbereich des Behälters reichen. Die mehrfache Umwälzung des Wasser erfolgt über eine Pumpe.

Mit der Lösung wird durch die Bewegung und die elektrische Ladung der Wirbelkörper eine Selbstreinigung der Platten gewährleistet und somit der Reinigungsprozeß beschleunigt. Durch die temporäre und lokale Überhöhung des Gradienten des elektrischen Feldes zwischen den aktivierten Elektroden und den metallischen Wirbelkörpern werden diese Abreinigungswirkungen selbst bei geringen Leitwerten des Wassers gewährleistet.

Die in dieser "Wirbelbettaufbereitung" entstehenden Hydroxydflocken, in welche die ausoxydierten Belastungsstoffe eingebunden sind, werden in einer nachfolgenden Filtrationsstufe aus dem Wasser gefiltert.

Die Erfindung wird nachfolgend anhand von Ausführungsbeispielen und zugehörigen Zeichnungen näher erläutert.
Es zeigen:
Fig. 1 eine Reinigungsvorrichtung in Vorderansicht,
Fig. 2 eine Schnittdarstellung gem. Fig. 1,
Fig. 3 eine erfindungsgemäße Reinigungsvorrichtung in Vorderansicht,
Fig. 4 eine Schnittdarstellung gemäß Fig. 3,
Fig. 5 eine weitere erfindungsgemäße Reinigungsvorrichtung in Vorderansicht und
Fig. 6 eine Schnittdarstellung gemäß Fig. 5.

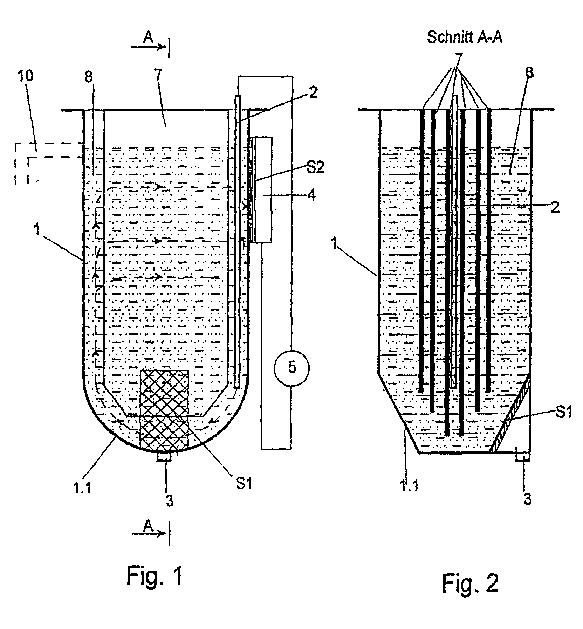

In Fig. 1 und 2 ist die Prinzipdarstellung einer Reinigungsvorrichtung dargestellt. Die Vorrichtung weist einen Behälter 1 mit einem Zulauf 2 für das zu reinigende Wasser, einen Abfluß 3 für die Entleerung und einen Ablauf 4 für das mit ausgeflockten Verunreinigungen versehene Wasser auf. Der Boden 1.1 des Behälters ist halbkreisförmig ausgebildet. Der Zulauf 2 ist in Form eines Tauchrohres ausgebildet, das bis nahe an den Boden 1.1 des Behälters 1 heranführt. Dieses ist z.B. aus Kunststoff oder anderem Material ausgebildet. Der Abfluß 3 wird im Boden 1.1 des Behälters 1 möglichst an der tiefsten Stelle angeordnet, um ein rückstandsfreies Entleeren zu gewährleisten. Eine Siebfläche S1 hält die Wirbelkörper zurück. Der Ablauf 4 ist im oberen Bcreich einer Seitenwand des Behälters angeordnet. Zwischen Ablauf 4 und Zulauf 2 ist eine Pumpe 5 angeordnet. Diese saugt im Umwälzbetrieb das Wasser über den Ablauf 4 ab und führt es über das Tauchrohr wieder zu. Um die Pumpe und das Leitungssystem vor Verunreinigungen und Wirbelkörpern zu schützen, ist im Bereich des Ablaufes ein Filter S2 vorgesehen.

Die Elektroden 7 sind in Form von Platten ausgebildet und ragen bis in den Bodenbereich des Behälters und verjüngen sich nach unten trapezförmig. Es wäre auch möglich, das in Richtung zum Boden 1.1 weisende Ende der Elektroden halbkreisförmig auszubilden. Der Schnitt A-A gem. Fig. 1 wird in Fig. 2 gezeigt. Der Behälter 1 verjüngt sich nach unten trapezförmig. Die in der Mitte angeordneten Elektroden ragen tiefer als die seitlich angeordneten Elektroden in den Behälter hinein. Das nach unten weisende Ende der Elektroden 7 folgt somit dem Anstieg des Bodens 1.1 des Behälters 1.

Vor oder nach Einfüllen der zu reinigenden Flüssigkeit wird eine Schüttung der Wirbelkörper in den Behälter 1 gefüllt.

Im Betriebszustand ragen die Elektroden 7 etwas über den Flüssigkeitspegel hinaus. Die Spannung wird den Elektroden zugeschalten und im Umwälzbetrieb das Wasser durch die Pumpe 5.über den Ablauf 4 und den Filter S2 abgesaugt und über das Tauchrohr 2 dem Behälter mittig wieder zugeführt. Durch den über die Pumpe erzeugten Druck werden die Wirbelkörper in Bewegung versetzt. Dabei wirkt sich die strömungstechnisch günstige Gestaltung für die Umwälzung des Wassers günstig aus. Es wird durch das seitlich angeordnete und bis in den Bodenbereich ragende Tauchrohr praktisch eine in Pfeilrichtung wirkende Umwälzung (Kreislauf) erzeugt. Die durch die Wasserströmung in Bewegung versetzten elektrisch leitfähigen Wirbelkörper gelangen unter anderem zwischen die Elektroden und laden sich elektrisch auf. Dadurch wird eine Erhöhung der aktiven Elektrodenoberfläche erzielt. Über den sich bei der Berührung der Wirbelkörper untereinander bildenden Abrieb werden weiterhin ständig hoch oxidative und elektrochemisch aktive Metalloberflächen an den Wirbelkörpern gebildet. Weiterhin erfolgt über die sich zwischen den Elektroden bewegenden elektrisch geladenen Wirbelkörper einerseits eine temporäre und lokale Überhöhung des Gradienten des elektrischen Feldes zwischen den Elektroden und andererseits eine Reinigung der Elektrodenflächen.

Neben dem beschriebenen Umwälzbetrieb, bei welchem das Wasser in den Behälter eingefüllt, einen definierten Zeitraum behandelt und anschließend über die Entleerung 3 wieder abgelassen wird, ist auch ein kontinuierlicher Durchflußbetrieb möglich. In diesem Fall ist der Ablauf nicht mit dem Zulauf über eine Pumpe verbunden, sondern es ist, wie gestrichelt dargestellt im oberen Bereich ein Ablauf 10 für das mit Ausflockungen angereicherte Wasser vorgesehen und ebenfalls mit einer Siebfläche S2 versehen, welche die Wirbelkörper zurückhält.

Die Zuführung des zu reinigenden Wassers sollte wie in der vorgenannt beschriebenen Ausführung möglichst im Bodenbereich erfolgen.

Neben der Erzeugung der Strömung durch das mit Druck einfließende Wasser kann die Wasserbewegung auch über ein Rührgerät, Druckdüsen oder ähnliche erfolgen.

Es können alle Wirbelkörper aus elektrisch leitendem Werkstoff ausgebildet sei, es ist jedoch auch möglich, eine Mischung mit elektrisch nicht leitenden Wirbelkörpern einzusetzen. Die elektrisch nicht leitenden Wirbelkörper können z.B. aus sortiertem Steinsplitt oder Quarzkies bestehen und erhöhen die Reinigungswirkung an den Elektroden 7.

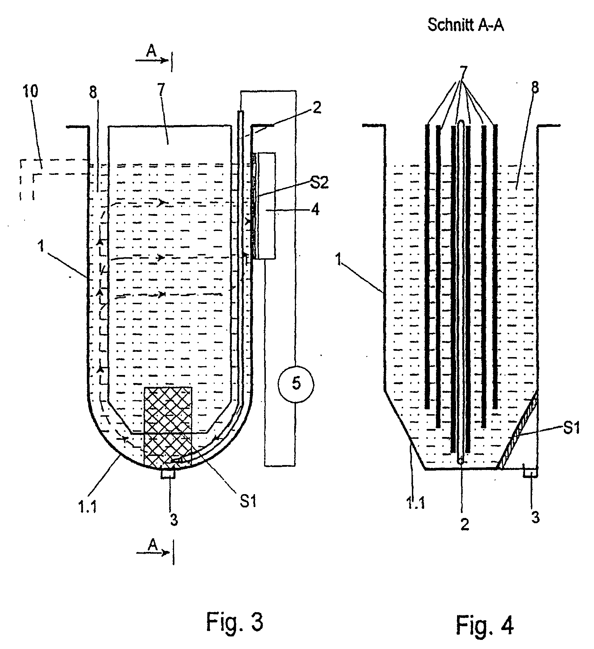

In Fig. 3 und 4 ist eine erfindungsgemäße Reinigungsvorrichtung dargestellt, bei der das Tauchrohr 2 mittig in dem sich trapezförmig verjüngenden Bodenbereich in Bodennähe mündet. An dieser Mündungsstelle des Tauchrohres 2 bildet der Boden (1.1) einen engen kanalförmigen Bereich (Fig. 4), in dem die Strömung alle auf dem Boden befindlichen Wirbelkörper 9 erfaßt und eine die Reinigungsleistung erhöhende starke Verwirbelung erzeugt.

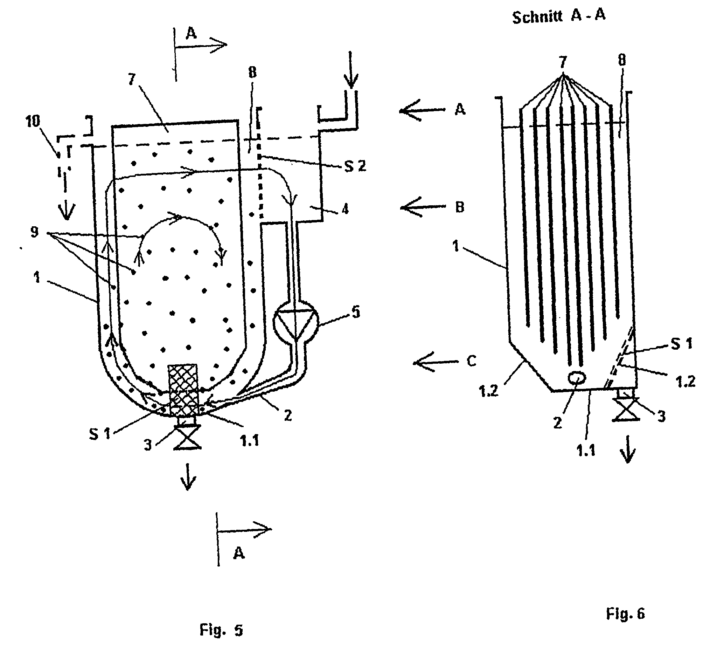

Fig. 5 und 6 zeigen eine erfindungsgemäße Reinigungsvorrichtung, bei der statt eines Tauchrohres 2 ein außerhalb des Gehäuses 1 geführter Zulauf 2 zum Einsatz kommt. Dieser besteht aus einem oberen Abschnitt A, über den das Schmutzwasser 8 zugeführt wird, einem mittleren Abschnitt B, in den der Ablauf 4 mündet, um vorgereinigtes Wasser nach Filterung mittels vorgeschaltetem Saugkammersieb S2 einem erneuten Reinigungskreislauf zuzuführen, und einem unteren Abschnitt C, in dem der Zulauf 2 im untersten Bodenbereich mittig zwischen den sich schräg nach unten verjüngenden Seitenwänden 1.2 durch das Gehäuse 1 hindurchtritt, so daß die Strömung, welche von einer in den Zulauf 2 geschalteten Pumpe 5 erzeugt wird, durch die mittige Einleitung wiederum alle am Boden 1. 1 befindlichen Wirbelkörper erfaßt und effektiv verwirbelt.

Mit der Erfindung wird insgesamt eine Möglichkeit der effektiven Reinigung von stark trübem Wasser und/oder Wasser mit sehr geringem Leitwert geschaffen, was bisher in dieser Form noch nicht möglich war. Weiterhin ist eine Betriebskostensenkung möglich, da die Metallopferung zur Flockenbildung vorwiegend durch preiswerte Abfallgranalien erfolgt.

## Patentansprüche

1. Vorrichtung zum Reinigen von Wasser, mit einem Gehäuse (1), in welchem Elektroden (7) angeordnet sind, einem Zulauf (2) für das zu reinigende Wasser (8), einem Ablauf (4) für das Bewegen des Wassers im Kreislauf, einem Abfluß (3) für die Entleerung des Gehäuses und Wirbelkörpern (9), die teilweise oder vollständig elektrisch leitend sind, **dadurch gekennzeichnet, daß**
- der Bodenbereich (1.1) des Gehäuses (1) in einer Ebene eine halbkreisförmig abgerundete Form und in der dazu im Winkel von 90 Grad liegenden Ebene eine sich nach unten trapezförmig verjüngende Form aufweist, wobei
- der Zulauf (2) mittig zu dem sich trapezförmig verjüngenden Bodenbereich in Bodennähe angeordnet ist, um eine Strömung entlang des sich halbkreisförmig verjüngenden Bodenbereichs zu erzeugen, und
- die Elektroden (7) dem Bodenbereich nachgeformt und parallel zur Strömungsrichtung angeordnet sind.

2. Vorrichtung nach Anspruch 1, **dadurch gekennzeichnet, daß** zwischen dem Ablauf (4) und dem Zulauf (2) eine Bypaßleitung und eine Pumpe angeordnet sind, durch welche im Umwälzbetrieb das zu reinigende Wasser über den Ablauf (4) und einen dem Ablauf (4) zugeordneten Filter (6) abgesaugt und über den Zulauf (2) dem Gehäuse wieder zugeführt wird.

3. Vorrichtung nach Anspruch 1 oder 2, **dadurch gekennzeichnet, daß** der Boden (1.1.) einen mit einer Siebfläche (S1) versehenen Abfluß (3) aufweist.

## Claims

1. An apparatus for cleaning water, comprising a housing (1) in which electrodes (7) are disposed, an inlet (2) for the water (8) to be cleaned, an outlet (4) for the movement of the water in a circulation, a discharge(3) for emptying the housing, and swirl bodies (9) which are partly or completely electrically conductive, **characterized in that**
- the floor zone (1.1) of the housing (1) is provided in one plane with a semi-circularly rounded shape and in the plane disposed at an angle of 90 degrees thereto with a shape tapering downwardly in a trapezoid shape, with
- the inlet (2) being disposed close to the floor in a central manner to the floor zone which tapers in a trapezoid manner in order to produce a flow along the semi-circularly tapering floor zone, and
- the electrodes (7) being shaped so as to match the floor zone and being disposed parallel to the direction of flow.

2. An apparatus as claimed in claim 1, **characterized in that** a bypass line and a pump are disposed between the outlet (4) and the inlet (2), by means of which the water to be cleaned is sucked off during the circulating operation via the outlet (4) and a filter (6) associated with the outlet (4), and is supplied again to the housing again via the inlet (2).

3. An apparatus as claimed in claim 1 or 2, **characterized in that** the floor (1.1) is provided with a discharge (3) provided with a screen surface (S1).

## Revendications

1. Dispositif pour la purification d'eau, avec une enceinte (1) dans laquelle sont disposées des électrodes (7), une arrivée (2) d'eau à purifier (8), un écoulement (4) pour la circulation de l'eau dans le circuit, une sortie (3) pour la vidange de l'eau et des corps tourbillonnaires (9) partiellement ou entièrement conducteurs électriques, **caractérisé en ce que** :
- la zone de fond (1.1) de l'enceinte (1) présente une forme arrondie en demi-cercle dans un plan et une forme resserrée en trapèze vers le bas dans un plan perpendiculaire à celui-ci,
- l'arrivée (2) étant disposée au centre de la partie du fond resserrée en forme de trapèze afin de créer une circulation le long de la partie du fond resserrée en demi-cercle, et
- les électrodes (7) sont formées à la suite de la zone de fond et disposées parallèlement au sens d'écoulement.

2. Dispositif selon la revendication 1, **caractérisée en ce qu'**il est prévu entre l'écoulement (4) et l'arrivée (2) une conduite de dérivation et une pompe qui aspirent l'eau à purifier via l'écoulement (4) et un filtre (6) associé à l'écoulement (4) et la font circuler pour la ramener dans l'enceinte par l'arrivée (2).

3. Dispositif selon la revendication 1 ou 2, **caractérisé en ce que** le fond (1.1) présente une sortie (3) pourvue d'une surface en crible (S1).
